# DEMANDE DE BREVET EUROPEEN

(11) **EP 0 610 103 A1**
(43) Date de publication de la demande: **10.08.1994**
(21) Numéro de dépôt: 94400023.1
(22) Date de dépôt: 05.01.1994
(51) Int. Cl.: B29C 65/50, B29D 23/22, F16L 47/00

(54) **Procédé de réalisation d'un bossage sur une canalisation de fluide en matériau composite et bossage ainsi obtenu**

(30) Priorité: 05.01.1993 FR 9300017
(71) Demandeur: ELECTRICITE DE FRANCE Service National, F-75008 Paris (FR); SEPMA SA, F-68100 Mulhouse (FR)
(72) Inventeur: Baguet, Michel, F-68260 Kingerskeim (FR); Emin, Michel, F-69003 Lyon (FR); Pilastre, André, F-69340 Francheville (FR)
(74) Mandataire: Schrimpf, Robert

(57) **Abrégé**

L'invention concerne un procédé de réalisation d'un bossage sur une canalisation (1) de transport de fluide en matériau composite. Selon l'invention, le procédé comprend les étapes consistant à :
- réaliser un perçage (2) débouchant à l'intérieur de ladite canalisation, de diamètre adapté à recevoir une extrémité (6) d'un embout tubulaire (5) à raccorder de façon étanche à la canalisation, cet embout comportant un filetage,
- solidariser par collage ladite extrémité (6) de l'embout et la canalisation (1),
- appliquer sur la surface externe de la canalisation bordant ledit perçage et sur l'embout des pièces de renfort en matière textile imprégnée de résine.

## Description

La présente invention concerne la réalisation d'un bossage sur une canalisation en matériau composite.

On entend par bossage un ensemble de moyens permettant de réaliser un piquage sur une canalisation, afin de prélever ou d'injecter du fluide dans celle-ci, pour servir à l'introduction de capteurs dans la canalisation ou pour effectuer des mesures.

On a proposé des bossages constitués par des inserts métalliques comportant une partie de fixation en forme de selle, à rapporter par sa face concave sur un secteur périphérique de ladite canalisation, et traversée par un embout tubulaire formant saillie sur sa face convexe, à positionner en regard d'un perçage prévu sur la canalisation. L'embout tubulaire communique de façon étanche avec la canalisation et permet, par exemple, de prélever du fluide circulant dans la canalisation, ou d'y introduire des capteurs de débit, de pression ou de température, ces capteurs étant fixés à l'embout au moyen d'une bride. Ces bossages connus ont rendu de grands services dans le cadre de canalisations soumises à de faibles pressions de fluide et à des températures peu élevées. Toutefois, ces bossages présentent une tenue mécanique et une étanchéité insuffisantes pour satisfaire aux exigences spécifiées dans certaines normes, notamment dans le domaine nucléaire. En outre, les inserts métalliques vieillissent mal, en raison des phénomènes de corrosion et des contraintes mécaniques internes engendrées par les écarts de coefficients de dilatation thermique du métal formant l'insert et du matériau composite constituant de la canalisation.

Par ailleurs, les canalisations en matériau composite présentent une surface externe qui n'est pas rigoureusement cylindrique de révolution à cause du procédé de fabrication de celles-ci par enroulement filamentaire. Les inserts connus, dont les faces destinées à contacter les canalisations sont cylindriques de révolution, s'adaptent mal sur la surface externe de ces canalisations, ce qui conduit à un risque de décollement de l'insert au cours du temps.

On a proposé dans le brevet américain N° 4 927 476 une solution consistant à introduire par l'intérieur de la canalisation un insert présentant une bride venant s'appuyer sur la surface radialement interne de la canalisation. Cette méthode convient pour des canalisations de grand diamètre mais n'est pas utilisable pour des canalisations de petit diamètre pour lesquelles on ne peut accéder à l'intérieur.

La présente invention vise à remédier aux inconvénients précités et a pour objet un procédé de réalisation d'un bossage sur une canalisation de fluide en matériau composite, quel que soit son diamètre.

De façon caractéristique, le procédé selon l'invention comprend les étapes consistant à:
- réaliser un perçage débouchant à l'intérieur de ladite canalisation, ce perçage présentant un diamètre adapté à recevoir une extrémité d'un embout tubulaire à faire communiquer de façon étanche avec l'intérieur de la canalisation,
- solidariser par collage l'extrémité de l'embout et la canalisation,
- appliquer sur la surface externe de la canalisation bordant ledit perçage et sur l'embout des pièces de renfort en matière textile imprégnée de résine, constituées par des disques de diamètre supérieur au diamètre externe de l'embout, fendus en leur centre selon au moins deux lignes de découpe se coupant au centre du disque et s'étendant sur une longueur suffisante pour permettre aux disques d'être enfilés sur l'embout.

Les pièces de renfort s'adaptent aux géométries particulières respectives de la canalisation et de l'embout tubulaire et l'on obtient de cette façon un assemblage fiable dans le temps, sans risque de décollement des pièces de renfort.

Avantageusement, ledit perçage est fraisé et l'embout est biseauté de façon complémentaire sur sa périphérie à ladite extrémité, pour réaliser un assemblage conique.

Avantageusement, l'embout comporte un filetage réalisé par surmoulage sur l'embout, et de préférence, ce filetage est un filetage conique surmoulé sur une surface de support conique, ménagée sur la surface interne de l'embout.

De préférence, les disques présentent des diamètres différents et sont empilés dans l'ordre des diamètres décroissants en décalant angulairement les lignes de découpe de deux disques successifs.

L'invention a également pour objet un bossage réalisé conformément au procédé précité sur une canalisation de fluide en matériau composite.

L'invention a encore pour objet un kit pour la réalisation, notamment sur site, d'un bossage conforme à l'invention et qui comporte de façon caractéristique :
- un embout en matériau composite,
- des pièces de renfort en matière textile,
- une colle apte à solidariser par collage l'embout et la canalisation,
- une résine époxyde apte à imprégner lesdites pièces de renfort en matière textile.

D'autres caractéristiques et avantages de la présente invention apparaîtront à la lecture de la description détaillée qui va suivre, non limitative de l'invention, et à l'examen du dessin annexé sur lequel:
- la figure 1 est une vue en coupe axiale, schématique, d'une canalisation de fluide en matériau composite et d'un embout fileté selon l'invention, avant assemblage,
- la figure 2 est une vue en coupe analogue à la figure 1 montrant la canalisation et l'embout assemblés par collage,
- la figure 3 est une vue illustrant la mise en place des pièces de renfort en matière textile imprégnée de résine sur la canalisation et l'embout,
- la figure 4 est une vue de côté de la canalisation équipée du bossage réalisé conformément à l'invention,
- la figure 5 est une vue en coupe montrant l'insertion d'un doigt de gant dans un bossage conforme à l'invention pour effectuer des mesures de température d'un fluide circulant dans la canalisation,
- les figures 6 et 7 illustrent de façon schématique la réalisation d'un filetage sur un embout tubulaire conforme à l'invention.

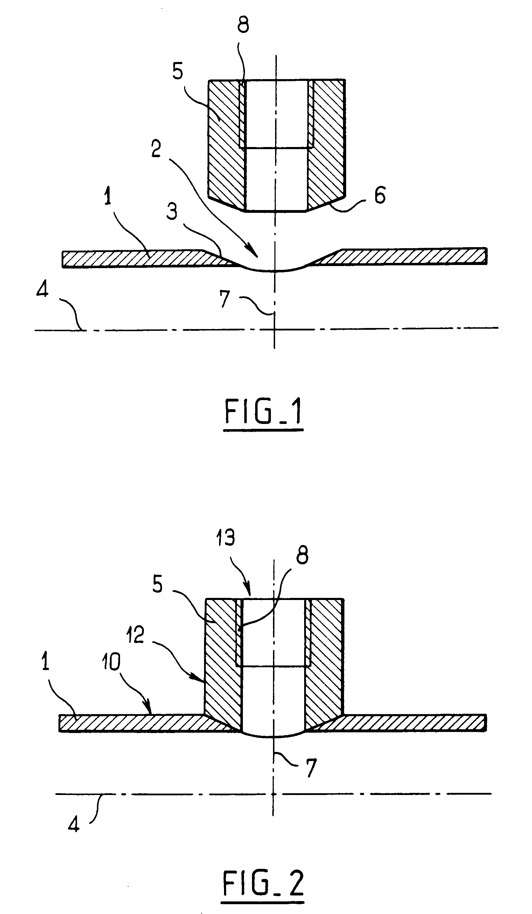

On a représenté sur les figures 1 à 3, en coupe axiale, une canalisation 1 connue en elle-même et réalisée en matériau composite, avantageusement par enroulement de fibres de verre imprégnées de résine époxyde. La canalisation 1 s'étend longitudinalement selon un axe désigné par la référence 4, contenu dans le plan de coupe des figures 1 à 3.

Conformément au procédé selon l'invention, on réalise sur la périphérie de la canalisation 1 en un point de piquage où l'on désire prélever du fluide sur la canalisation, injecter un produit ou effectuer des mesures, un perçage 2 débouchant à l'intérieur de celle-ci. L'axe du perçage 2 est désigné par la référence 7 et de préférence, comme représenté, coupe perpendiculairement l'axe 4 de la canalisation. Le perçage 2 est effectué par tout moyen approprié connu de l'homme de l'art, par exemple au moyen d'une cloche en acier diamanté.

Conformément à l'invention, le diamètre et la géométrie du perçage 2 sont adaptés à recevoir une extrémité 6 d'un embout tubulaire 5, avantageusement en matériau composite, comprenant de préférence un filetage 8. De préférence, l'embout 5 est réalisé par enroulement de fibres de verre imprégnées de résine et le filetage 8 est venu de surmoulage sur la surface interne de l'embout 5 comme cela sera précisé dans la suite.

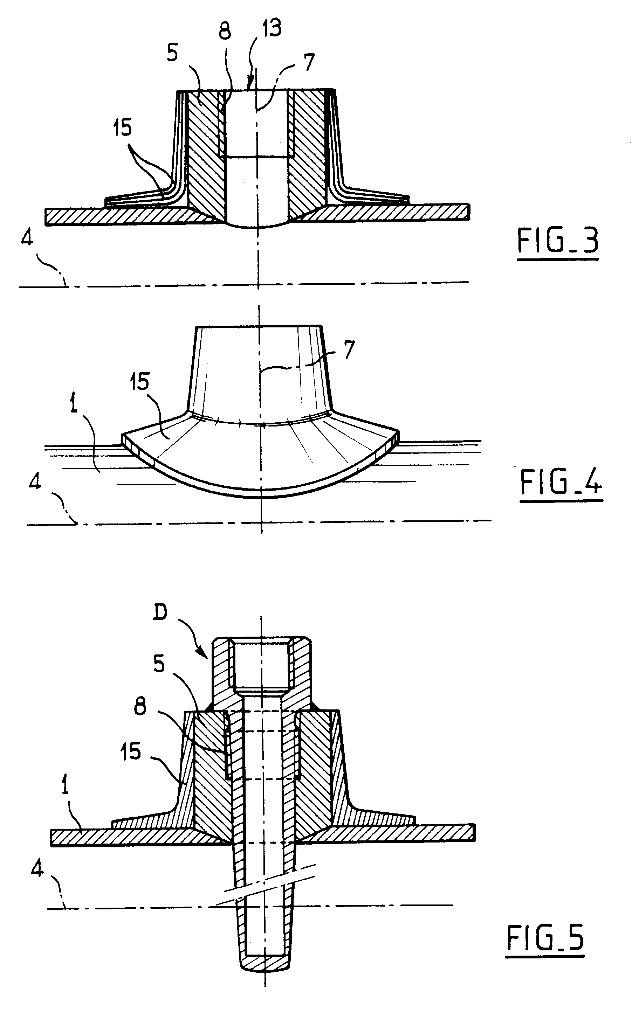

Avantageusement, comme représenté, le perçage 2 est fraisé à 45° par rapport à l'axe 7, pour former une surface conique 3 s'élargissant vers l'extérieur de la canalisation et l'extrémité 6 de l'embout 5 est chanfreinée de façon complémentaire pour réaliser un assemblage conique lorsque celle-ci est rapportée sur le perçage de la canalisation 1, comme représenté sur la figure 2. La canalisation 1 et l'embout 5 sont solidarisés par collage, de préférence au moyen d'une colle époxyde à deux composants, connue en elle-même. Après durcissement de la colle, la surface externe 10 de la canalisation 1 bordant le perçage 2 et la surface externe 12 de l'embout 5 sont dépolies, par exemple au moyen d'une meule diamantée, pour enlever d'éventuelles traces de colle ayant débordé sur ces surfaces lors du collage de l'embout 5 sur la canalisation 1. Ensuite, conformément à l'invention, la tenue de l'embout 5 sur la canalisation 1 est renforcée en appliquant des pièces de renfort 15 en matériau textile, imprégnées de résine, sur la surface externe 10 de la canalisation 1 bordant le perçage 2 et sur la surface externe 12 de l'embout 5, comme représenté sur la figure 3. De préférence, ces pièces de renfort en matière textile sont constituées par du tissu de verre imprégné d'une résine compatible avec le fluide circulant dans la canalisation et/ou l'ambiance dans laquelle la canalisation est placée. Il s'agit par exemple d'une résine du type vinylester, et il s'agit plus particulièrement dans la réalisation décrite de tissu connu sous la désignation commerciale ROVIMAT, et de résine commercialisée par la firme DOW CHEMICAL sous la désignation commerciale DERACAN 411.45, avec comme catalyseur du péroxyde de méthyléthylcétone et comme accélérateur des sels de cobalt et de la dimétylaniline.

Le nombre de pièces de renfort 15 appliquées sur les surfaces externes de la canalisation et de l'embout est apprécié par l'homme de l'art en fonction de la tenue mécanique souhaitée. Habituellement, de cinq à dix pièces de renfort en matière textile suffiront pour la plupart des applications. Avantageusement, les pièces de renfort 15 sont des disques dont le diamètre est supérieur au diamètre externe de l'embout 5 et qui sont fendus en leur centre par deux lignes de découpe de longueur inférieure au diamètre du disque, se coupant au centre du disque et de préférence à angle droit. Les lignes de découpe permettent d'enfiler les disques sur l'embout 5. De préférence, l'empilement des disques est réalisé en prenant des disques de différents diamètres, les disques étant empilés dans l'ordre des diamètres décroissants et en décalant angulairement les lignes de découpe de deux disques successifs.

De préférence, l'embout 5 et la canalisation comportent intérieurement un revêtement constitué d'une couche de résine époxyde, non représenté sur les figures 1 à 3, destiné à former barrière d'étanchéité.

Le bossage réalisé sur la canalisation 1 présente, vu de l'extérieur, l'allure représentée sur la figure 4. Ce bossage peut servir comme illustré sur la figure 5, à la mesure de la température d'un fluide circulant dans la canalisation 1, au moyen d'un doigt de gant D engagé par vissage à l'intérieur de l'embout et dont une extrémité fait saillie à l'intérieur de la canalisation 1.

Le doigt de gant D ferme de façon étanche l'embout 5 grâce à l'engagement d'un filetage prévu sur le doigt de gant et du filetage 8 de l'embout.

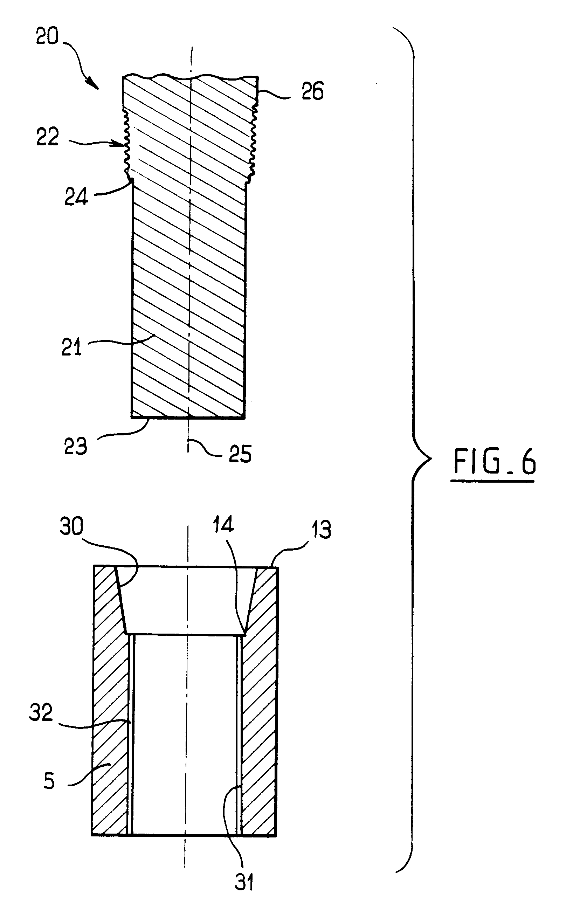

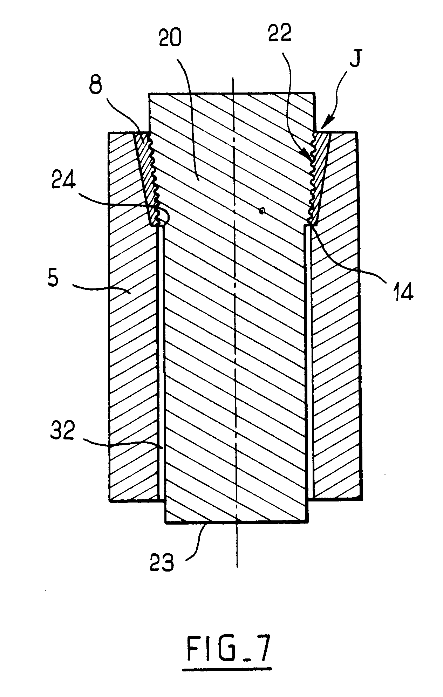

Conformément à une caractéristique avantageuse de l'invention, le filetage 8 est surmoulé sur l'embout 5. Le filetage 8 est réalisé au moyen d'un conformateur 20, comme illustré sur les figures 6 et 7. Plus particulièrement, dans l'exemple de réalisation décrit, le filetage 8 est réalisé sur une surface d'apprêt 30, symétrique de révolution, conique et divergeant en direction de l'extrémité 13 de l'embout 5, opposée à l'extrémité 6 reçue dans le perçage de la canalisation. La surface d'apprêt 30 ménage avec la surface interne cylindrique 31 du reste de l'embout un épaulement 14 s'étendant radialement en retrait de la surface cylindrique 31. On a référencé 32 un revêtement d'étanchéité tel que précité, formé sur la surface cylindrique interne 31. Le filetage 8 réalisé sur l'embout est de préférence conique, de façon à conférer une grande étanchéité au raccordement sur cet embout d'un autre élément, par exemple une canalisation secondaire, une sonde de mesure ou le doigt de gant D précité. Le filetage 8 satisfait avantageusement à la norme française NF E 03-004 publiée dans le Journal Officiel du 17 Novembre 1981.

Le conformateur 20 présente une partie cylindrique 21 d'axe 25, de diamètre externe légèrement inférieur au diamètre interne de l'embout 5, à introduire par une extrémité 23 dans l'extrémité précitée 13 de l'embout 5 et un épaulement 24 formant saillie radialement vers l'extérieur, apte à limiter l'introduction du conformateur 20 dans l'embout 5, par butée axiale sur l'épaulement 14 précité, comme représenté sur la figure 7.

Le conformateur 20 présente une surface filetée 22 de forme complémentaire du filetage à réaliser sur l'embout 5, s'étendant au-delà de l'épaulement 24, en éloignement de l'extrémité 23, et le conformateur 20 se prolonge par une partie de support 26, liée par tous moyens appropriés, à des moyens de support et/ou d'entraînement du conformateur 20, connus en eux-mêmes et non représentés.

Pour réaliser le filetage, on commence de préférence par préchauffer le conformateur 20 et l'embout 5 dans une étuve, puis on applique sur l'une au moins de la surface filetée 22 du conformateur 20 et de la surface d'apprêt 30, de préférence les deux, une résine comprenant une charge minérale ou organique destinée à améliorer la tenue mécanique du filetage. Le conformateur 20 enduit de résine chargée est introduit dans l'embout 5 par son extrémité 23 jusqu'à venir en butée axialement, par l'épaulement 24 contre l'épaulement 14 de l'embout. La mise en place du conformateur 20 et de l'embout 5 l'un dans l'autre peut se faire par tous moyens, par exemple en fixant le conformateur 20 et en déplaçant l'embout 5. L'embout 5 et le conformateur 20 sont enduits de préférence d'une quantité de résine chargée en excès, de telle sorte que lors de l'introduction du conformateur 20 dans l'embout 5, la résine remplisse de façon certaine tout l'espace compris entre les surfaces d'apprêt 30 et filetée 22 et déborde éventuellement hors de cet espace. Le cas échéant, l'excès de résine débordant hors de l'espace précité est éliminé avant polymérisation de la résine chargée. L'ouverture de l'embout 5 à l'extrémité 13 et la partie de support 26 du conformateur 20 ménagent un jeu J permettant aux microbulles d'air contenues dans la résine chargée de s'évacuer.

De préférence, la polymérisation de la résine est effectuée en deux étapes. Dans une première étape, on laisse gélifier la résine chargée à température ambiante puis dans une deuxième étape l'ensemble est chauffé à une température plus élevée, typiquement supérieure à 100°C, dont le choix dépend de la résine utilisée.

Ensuite, après polymérisation, on laisse refroidir jusqu'à température ambiante, et le conformateur 20 est retiré par dévissage. Bien entendu, on peut effectuer sur l'embout obtenu, muni de son filetage, tous travaux de finition connus de l'homme de l'art, notamment pour éliminer les bavures formant saillie aux extrémités axiales des filetages.

La résine chargée utilisée est choisie par l'homme de l'art en fonction de la tenue mécanique et de la tenue en température souhaitée pour le filetage. Avantageusement, cette résine est une résine époxyde, mélangée de préférence vingt-quatre heures avant utilisation, avec un durcisseur polyamine cycloaliphatique et avec des charges minérales. De préférence, on incorpore entre 50 et 70 % en masse de charge minérale, constituée avantageusement par des fibres de longueur inférieure à 1 mm et de diamètre maximal de 30 µm et par des microbilles de verre de diamètre maximal 50 µm.

Finalement, l'invention permet de réaliser de façon aisée un bossage résistant à la corrosion et offrant une très bonne tenue à la pression et à la température, par exemple une tenue à des cycles de pression, conformément à la norme ASTM D2143 supérieure à 40 bars et à une température supérieure à 80°C.

## Revendications

**1/** Procédé de réalisation d'un bossage sur une canalisation (1) de fluide en matériau composite, caractérisé en ce qu'il comprend les étapes consistant à :
- réaliser un perçage débouchant à l'intérieur de ladite canalisation, ce perçage présentant un diamètre adapté à recevoir une extrémité (6) d'un embout tubulaire (5) à faire communiquer de façon étanche avec l'intérieur de la canalisation,
- solidariser par collage ladite extrémité de l'embout et la canalisation,
- appliquer sur la surface externe de la canalisation bordant ledit perçage et sur l'embout des pièces de renfort (15) en matière textile imprégnée de résine, constituées par des disques de diamètre supérieur au diamètre externe de l'embout, fendus en leur centre selon au moins deux lignes de découpe se coupant au centre du disque et s'étendant sur une longueur suffisante pour permettre aux disques d'être enfilés sur l'embout.

**2/** Procédé selon la revendication 1, caractérisé en ce que les disques présentent des diamètres différents et sont empilés dans l'ordre des diamètres décroissants en décalant angulairement les lignes de découpe de deux disques successifs.

**3/** Procédé selon l'une des revendications 1 et 2, caractérisé en ce que ledit perçage est fraisé et l'embout est biseauté sur sa périphérie à ladite extrémité de façon complémentaire, pour réaliser un assemblage conique.

**4/** Procédé selon l'une des revendications 1 à 3, caractérisé en ce que l'embout comporte un filetage (8) réalisé par surmoulage sur celui-ci.

**5/** Procédé selon la revendication 4, caractérisé en ce que ledit filetage est un filetage conique surmoulé sur une surface d'apprêt conique (30), ménagée sur la surface interne de l'embout.

**6/** Bossage en matériau composite, caractérisé en ce qu'il est obtenu par la mise en oeuvre du procédé selon l'une des revendications 1 à 5.

**7/** Kit pour la réalisation d'un bossage sur une canalisation de fluide en matériau composite, caractérisé en ce qu'il comporte :
- un embout en matériau composite,
- des pièces de renfort en matière textile,
- une colle apte à solidariser par collage l'embout et la canalisation,
- une résine époxyde apte à imprégner lesdites pièces de renfort en matière textile.

**8/** Kit selon la revendication 7, caractérisé en ce que lesdites pièces de renfort en matière textile sont des disques de diamètre supérieur au diamètre externe de l'embout et fendus par deux lignes de découpe se coupant au centre du disque.

**9/** Kit selon la revendication 8, caractérisé en ce que lesdites lignes de découpe sont orthogonales.
